Europäisches Patentamt

European Patent Office

Office européen des brevets

(11) Publication number: **0 369 570**
**A1**

## EUROPEAN PATENT APPLICATION

(21) Application number: 89306898.1

(22) Date of filing: 06.07.89

(51) Int. Cl.⁵: **G01D 5/10, G01B 3/22**

(30) Priority: 16.11.88 GB 8826761
09.02.89 GB 8902871

(43) Date of publication of application:
**23.05.90 Bulletin 90/21**

(84) Designated Contracting States:
**AT BE CH DE ES FR GB GR IT LI LU NL SE**

(71) Applicant: **INTEL GASGARDS PRIVATE LIMITED**
**505 Chiranjiv Towers**
**New Delhi(IN)**

(72) Inventor: **Gupta, Pankaj**
**House No. 610 Sector 18-b**
**Chandigarh(IN)**
Inventor: **Gupta, Salil**
**House No. 610 Sector 18-b**
**Chandigarh(IN)**

(74) Representative: **Harrison, Philippa Dinah et al**
**A. A. THORNTON & CO Northumberland**
**House 303-306 High Holborn**
**London WC1V 7LE(GB)**

(54) **Improvements in and relating to sensors.**

(57) The sensor is adapted for sensing relative displacement of a relatively movable body and is advantageously sensitive to displacements of the order of or less than 1 mm or is sensitive to displacements caused by forces or pressures or changes in force or pressure of the order of or less than 10 millibar. The sensor (1) comprises an elongate member (16) longitudinally slidable in a housing (33) in dependence on the relative displacement of the body (10). The elongate member has a longitudinal engagement surface provided for example with teeth (18) which engage with teeth provided on the periphery of a rotatable member (19) mounted for rotation in the housing. The rotatable member is associated with an arm (21) which may carry an indicator (23) at its end which is movable with rotation of the rotatable member over a scale (22). The assembly comprising the elongate member, the rotatable member and the arm is arranged to be substantially balanced about the axis of the rotatable member with a slight resultant force on the elongate member tending to move it in the direction of the body, the resultant force being less than the force on the body causing the displacement to be sensed by the sensor. For this purpose, the assembly may include a spring (25) acting for example on the rotatable member about its axis for counterbalancing any imbalance in the moments of the elongate member and arm about the axis of the rotatable member.

Fig.1.

## Improvements in and relating to Sensors

The present invention relates to a sensor responsive to relative displacement of a relatively movable body. The sensor may be intended for indicating or measuring the displacement of the body or another parameter which varies with or causes the displacement, or for control or any other purpose.

According to one aspect of the present invention there is provided a sensor for sensing relative displacement of a relatively movable body comprising a housing, and a sensing assembly comprising an elongate member, a rotatable member and arm means, the elongate member being mounted in the housing for linear longitudinal movement between a first position and a second position in dependence on the relative displacement of the body and having a longitudinally extending engagement surface, the rotatable member having a circumferential engagement means and being mounted in the housing so as to permit engagement between the engagement surface of the elongate member and the engagement means of the rotatable member for causing rotation of the rotatable member with longitudinal movement of the elongate member, and the arm means being arranged to be rotated with rotation of the rotatable member, wherein the assembly is arranged so as to be substantially balanced about the axis of the rotatable member.

The arms means may be formed integrally with the rotatable member or may comprise an arm coupled to the rotatable member for rotation therewith. The arm means may also comprise indicator means movable over a scale, which may be a linear scale or an angular scale.

The sensor may be intended for sensing any parameter which can be arranged to displace a body, for example a force or pressure. For example, the body may be a diaphragm which is subject on one face to a fluid whose pressure is to be sensed and which is deflected to an extent dependent on the pressure of the fluid. Alternatively, the elongate member may be movable by a body against a known force or may sense displacement of an intermediary body by a body against a known force, the displacement of the member by the body then being indicative of the force applied to or by the body.

The engagement surface of the elongate member and the engagement means of the rotatable member may be adapted to be in frictional contact for transmitting movement therebetween. Alternatively the engagement surface and engagement means may be adapted to provide positive engagement therebetween, for example both may be provided with interengageable teeth or one may be formed as a cam and the other as a cam follower.

Additionally the rotatable member or arm means may be used to operate other means, such for example as control means or alarm means, and/or may be sensed by means providing an electronic or electrical signal, which may provide an analogue or digital measurement, which may be transmitted remotely. Where the rotatable member or arm means is used to operate means, they may be operated electrically, electronically or mechanically.

Advantageously, the elongate member is arranged to contact the body for sensing displacement of the body but is not mechanically connected or linked with the body. The elongate member may contact the body directly or indirectly through the intermediary of means for amplifying or reducing movement of the body, which may for example comprise one or a system of pivotal levers.

Adjustable means may be provided for adjusting contact between the body and the elongate member and for communicating displacement of the body to the elongate member and rotatable member.

The sensor may be adapted for sensing very small displacements, e.g of the order of 1 mm or less, preferably five microns or less, or for sensing displacements caused by very small forces or pressures or changes in forces or pressures, for example of the order of 10 millibars or less, preferably 1 millibar or less or 10 centinewtons (0.1N) or less.

The components of the assembly may be arranged so that there is a small resultant force acting in a direction to bias the elongate member towards its first position.

The elongate member and the arm means may be arranged so that the moment about the axis of the rotatable member of the elongate member is substantially equal but opposed to the moment about the axis of the rotatable member of the arm means, in all operative positions of the arm.

The assembly may include biasing means for biasing another component of the assembly for adjusting the balancing of the moments of the elongate member and arm means to ensure that the elongate member is very slightly biased in the direction of its first position. Alternately the biasing means may be provided to compensate for any imbalance in the moments of the elongate member and the arm means so as to ensure that there is a slight resultant moment biasing the elongate member towards its first position. The biasing means may be in the form of a torsion spring or spiral hairspring acting on the rotatable member or in the form of a compression tension spring acting on the elongate member or arm means when it is separate from the rotatable member.

The arm means may alternatively be arranged to be balanced about the axis of the rotatable member and the moment of the elongate member is then substantially balanced by the biasing means.

Where the sensor is intended for sensing a displacement caused by a very small force or pressure or by a very small force or pressure change, the bias is advantageously arranged to be less than the force or pressure or force change or pressure change to me measured.

Where positive engagement between the elongate and rotatable members is provided by teeth, the engagement surface of the elongate member is part cylindrical in section and the teeth thereof are formed on the cylindrical surface. This can minimise the area of contact between the teeth of the elongate member and of the rotatable member to thereby reduce friction therebetween.

The sensor may be arranged to sense the displacement of the body over the full range of displacements, or may be arranged to be responsive in only one or more predetermined parts of the full range of displacement of the body, which parts may be at one or both ends and/or intermediate the ends of the full range.

Where the sensor is intended to be responsive to displacements of the body over one or more predetermined parts of the full range of displacement of the body, stop means may be provided for temporarily or permanently halting movement of the elongate member so that the elongate member is contacted or moved by the body only when the body has been displaced to a position within the or one of the predetermined parts of the range of displacements. The stop means are preferably adjustable at least initially and may be adapted to be overcome to permit further movement of the elongate member. Depending on which part or parts of the range of displacement of the body is to be sensed, the stop means may hold the elongate member out of contact with the body over a part of the range of displacement of the body and/or may hold the elongate member stationary temporarily or permanently against continued displacement of the body while the elongate member is in contact therewith. For example, the elongate member may comprise a contact head which is telescopable relative thereto to permit displacement of the body in the direction of the elongate member without causing movement thereof.

For sensing fluid pressure, the sensor may be incorporated in a fluid pressure sensing device comprising a housing, a diaphragm mounted in the housing and defining therewithin a first chamber and a second chamber, the first chamber having an inlet for fluid for exposing one face of the diaphragm to the fluid so as to cause deflection of the diaphragm in dependence on the pressure of the fluid, the sensor being mounted in the second chamber for sensing displacement of the diaphragm, the elongate member extending generally in the direction of displacement of the diaphragm. The pressure sensing device may for example be intended to measure or indicate fluid pressure or fluid pressure changes in a fluid system, the scale of the indicator then being calibrated in pressure or differential pressure. It may alternatively be intended for indicating leaks into or out of a fluid system, the scale being then calibrated to indicate pressure or a deviation from a predetermined pressure or other suitable parameter such as the quantum or rate of leakage into or out of the system. Alternatively, such a pressure sensing device may be incorporated in a gas utilisation system supplied with gas from a cylinder of liquefied gas, the device being either connected into the system downstream of the gas pressure regulator or incorporated in the gas pressure regulator itself, for indicating or measuring the quantity of liquefied gas remaining in the cylinder either in terms of the remaining liquefied gas content of the cylinder or in terms of the time scale of normal use of the remaining liquefied gas, for example with a view to alerting the user of the system to the approaching need for replacement of the cylinder.

Alternatively the sensor may be associated with another body which is displaced in accordance with a pressure or pressure change, such for example as a bourdon tube.

For sensing a compressive or tensile force, the sensor may be arranged to sense the displacement of the body by the force against a known force which may be applied to the elongate member or to an intermediary body whose displacement is then sensed by the sensor.

Embodiments according to the present invention will now be described, by way of example only, with reference to the accompanying drawings, in which:

Figure 1 is part section part side elevation of an embodiment of sensor according to the present invention;

Figure 2 is a side elevation of the sensor of Figure 1;

Figure 3 is a view of the sensor of Figures 1 and 2 in the direction of the arrow III;

Figure 4 is a side elevation similar to Figure 3 showing a modification of the sensor of Figure 1;

Figure 5 is a section on the line V-V of Figure 1;

Figure 6 is a part section part side elevation of another embodiment of sensor according to the present invention;

Figure 7 is a sectional view showing a modification of the sensors of Figures 1 to 6;

Figure 8 is a sectional view of an embodiment of a pressure sensing device according to the present invention incorporating an embodiment of sensor in accordance with the present invention;

Figures 9 and 10 are sectional views of other embodiments of pressure sensing devices;

Figure 11 is a graph shown deflection of the diaphragm in the pressure sensing device of Figure 8;

Figures 12 and 13 are sectional views showing further embodiments of sensors according to the present invention;

Figure 14 is an enlargement of part of Figure 13; and

Figures 15 to 18 are sectional views of further embodiments of devices incorporating embodiments of sensors according to the present invention.

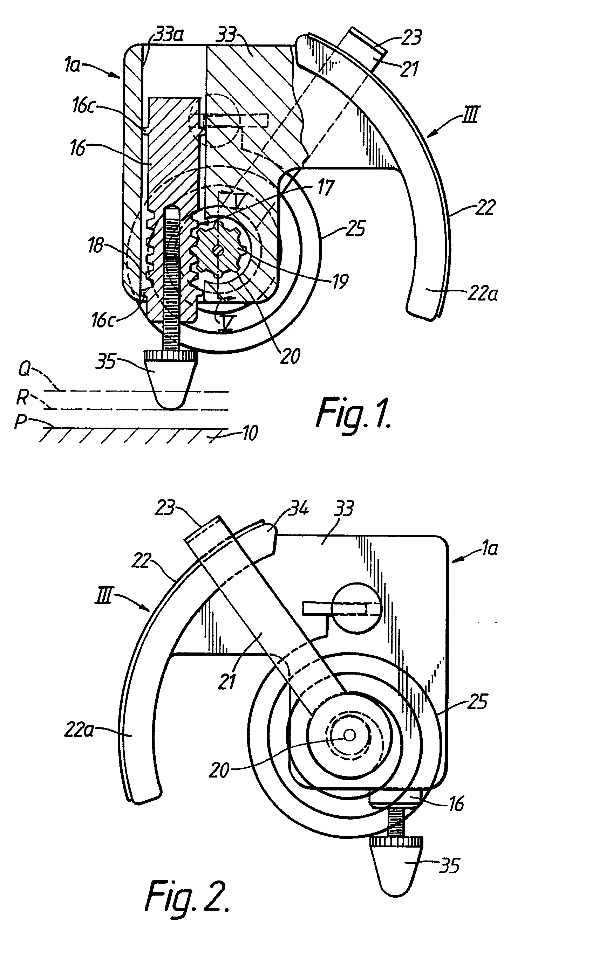

Figures 1 to 3 show an embodiment of sensor for sensing the displacement of a body 10. The sensor 1a comprises an elongate member 16 which, in this embodiment, is in the form of a cylindrical rod but may have another section, for example it may be polygonal in section. The rod 16 is linearly longitudinally movable in and guided by a correspondingly shaped passage 33a in a housing 33. One end of the rod 16, as shown the lower end, projects from the housing and is arranged in the path of displacement of the body 10 so as to be contacted by the body 10, the rod 16 then being moved by the body 10. The rod 16 is not however in any way mechanically connected to or linked with the body 10.

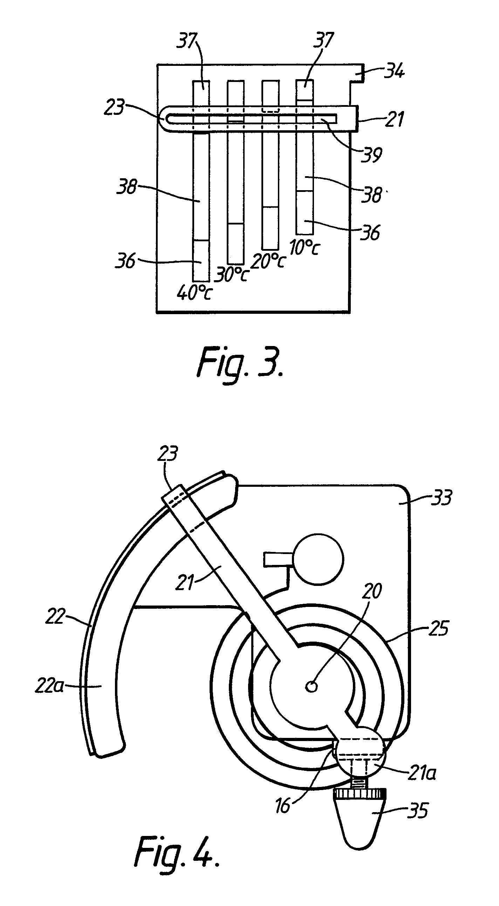

The rod 16 is provided over part of its length with a longitudinally extending engagement surface 17 with which a circumferential engagement surface of a rotatable member 19 engages. In this embodiment, the engagement surfaces of both the rod 16 and the member 19 are provided with interengageable engagement means which, as shown, comprise a longitudinal array of teeth forming a longitudinally extending rack 18 on the rod 16 and an annular array of teeth on the member 19 which is in the form of a pinion. Pinion 19 is mounted in the housing 33 on a shaft 20 to which it is fixed and about the axis of which it rotates. One end of shaft 20 projects beyond the housing 33 and is provided with an arm 21 which carries at its free end an indicator 23. The indicator 23, as shown more clearly in Figure 3, moves over a linear scale 22 provided on an arcuate support 22a centred on the axis of shaft 20.

In this embodiment, the rod 16 and scale 22 are arranged on opposite sides of the axis of the pinion 19 so that, for the full range of movements of the arm 21, the moment of the rod 16 about the axis of the pinion 19 is opposed to the moment of the arm 21 with indicator 23 about the axis of the pinion. Preferably the sensor is arranged as shown in Figures 1 and 2 with the rod 16 moving vertically. These moments may be arranged to be substantially equal so that the system is substantially balanced about the axis of the pinion 19 but, to ensure that the rod 16 maintains contact with a body 10 and to take up any play or backlash between the teeth of the pinion 19 and the teeth of the rack 18 in use of the sensor, the assembly is arranged so that there is a small resultant moment acting downwardly (counterclockwise as viewed in Figure 1) on the rod 16 in all positions of the arm 21.

A spring 25 may be provided acting on the shaft of the pinion for contributing to the required balancing of the moments of the rod and arm with its indicator, either as a means for conveniently adjusting the balance or for compensating imbalance, where the moments of the rod 16 and arm 21 with its indicator are not substantially equal, to achieve the required balancing. The spring, e.g. a spiral spring as shown in Figure 1, may act in a clockwise or anticlockwise direction (as viewed in Figure 1) depending on the direction of the imbalance in the moments to be compensated or adjusted. The spring is advantageously initially adjustable for initial adjustment of the balancing.

It will be appreciated that this substantial balancing of the moments of the rod 16 and the arm 21 with its indicator 23 is critical where the sensor is intended for sensing very small displacements, for example of the order of five microns or less, and displacements caused by very small forces or pressures or changes in forces or pressures, for example of the order of a millibar or a small fraction of a millibar or ten centinewtons (0.1N) or less. For such uses, the rod is arranged to move vertically and the moment of the rod 16 about the axis of the pinion is arranged to be substantially equal to the moment of the arm 21 with its indicator about the axis of the pinion, and the spring 25, which is a hairspring, is arranged to apply a very small force which is substantially constant over the range of movements of the arm, to the axis of the pinion in a direction to achieve a small resultant moment, over the full range of movements of the arm, tending to move the rod in the direction of body 10.

In a preferred embodiment, the tolerances on the moment of the rod are arranged relative to those on the moment of the arm with its indicator such that the moment of the rod will, throughout the range of movement of the arm, be greater than that of the arm with its indicator and the hairspring 25 then acts in a clockwise direction.

To minimise the effects of changes in the moment of the arm with its indicator as the arm rotates and the indicator moves over the scale 22, the scale 22 may be centred on a horizontal line through the axis of the pinion, rather than as shown in Figure 1 in which the scale is mainly above the horizontal.

To remove the effect of changes in the moment of the arm 21 with its indicator 23 about the axis of the pinion 19 as the indicator 23 moves over the scale 22, the arm 21 may be provided with a counterbalancing extension so that the arm 21 with its indicator and extension 21a exerts no force or substantially no force about the axis of the pinion 19. Such a modification is shown in Figure 4, the counterbalancing arm extension 21a being made or formed integrally with the arm 21 for rotation with the arm 21. The axis of the pinion 19 passes through the centre of gravity of the combined arm, indicator and arm extension. With this modification, the spring 25 is arranged to provide a constant bias on the shaft 20 to substantially counterbalance the moment of the rod 16 about the axis of pinion 19 but so as to provide a small resultant moment biasing the rod 16 in the downward direction of the body 10. However, if the rod 16 is sufficiently light in weight that its moment about the axis of pinion 19 does not need to be counterbalanced, the spring 25 may then serve merely to provide a slight bias on the pinion 19 in the counterclockwise direction as viewed in Figure 4 sufficient to maintain the teeth of the pinion 19 in engagement with the teeth of the rack 18 to take up any play or backlash therebetween.

It will be appreciated that, with this modification of arm 21, there is no limit on the angular movements of the arm 21 about the axis of the pinion 19.

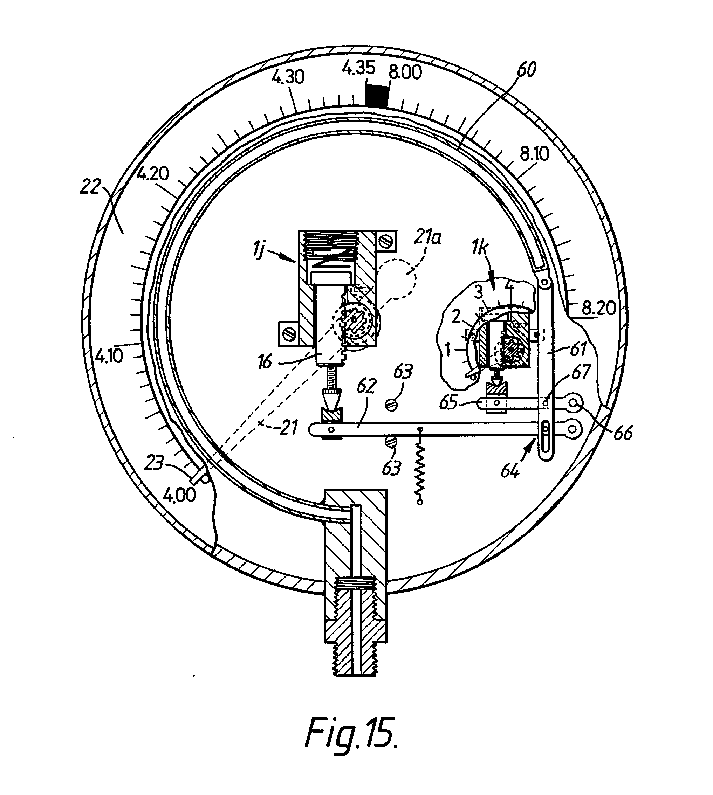

The sensor of Figure 4 can be further modified by replacing the linear scale 22 with an angular scale centred on the axis of the pinion 19, the end of arm 21 then serving as the indicator 23, for example as is shown in Figures 15 to 18. The counterbalancing extension 21a has, with this modification, a reduced weight because it does not have to counterbalance the weight of the added indicator 23 of Figure 4.

Where the displacement of the body 10 is caused by a very small force or pressure or a very small force or pressure change which is to be sensed, the resultant force biasing the rod 16 in the direction of the body is arranged to be less than the minimum force or pressure or change in force or pressure initiating a displacement to be sensed.

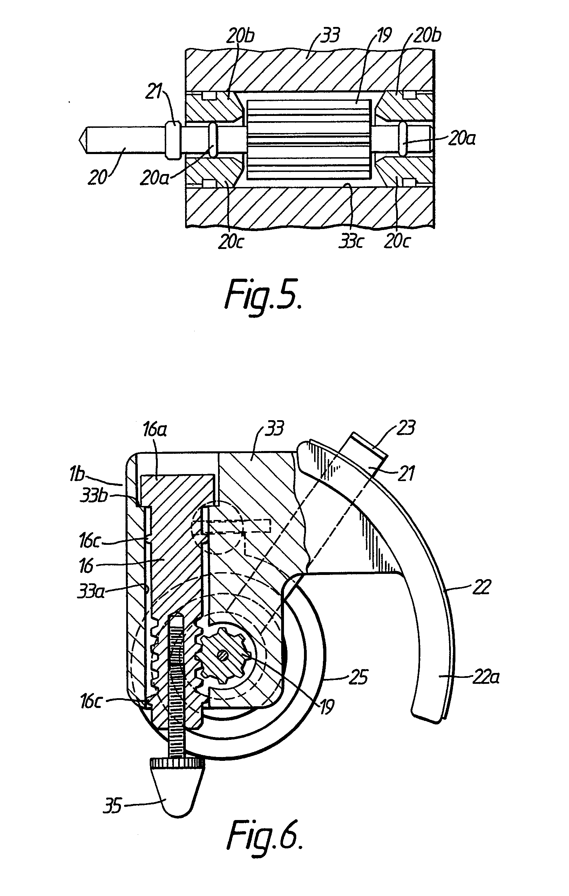

To increase the sensitivity of the sensor and reduce the inertia, the rod 16, arm 21 and indicator 23 can be made of very light materials. Additionally, to minimise friction in the sensor, the rod 16 may be positively guided in the passage 33a by annular bearings arranged to either end of the engagement surface 17. The bearings may be in the form of annular sleeves mounted in the passage 33a adjacent each end, the sleeves having radially inwardly projecting annular bearing surfaces which are radiussed to reduce the area of contact between the sleeve and the rod. The shaft 20 of the pinion may be provided with similar bearings. Alternatively, as shown in Figure 1, the rod 16 may be formed or provided with spaced annular radial projections 16c which have radiussed circumferential surfaces for bearing on the wall of the passage 33a. The shaft 20 of the pinion may also be provided with similar bearings, for example as shown in Figure 5. As shown in Figure 5, the shaft 20 is provided with radial annular projections 20a on either side of the pinion 19. The projections bear against the cylindrical internal surfaces of annular bearing bushes 20b located in passage 33c in the housing 33 through which the shaft 20 extends. The bushes are preferably made to be a loose fit in the passage 33c and are fixed in position during assembly, e.g. by adhesive, when the teeth of the pinion and rod have been correctly aligned. The end faces 20c of the bushes facing the ends of the pinion may also provide bearing surfaces for the ends of the pinion and, to reduce friction, these end surfaces 20c may also be radiussed to reduce the area of contact. Alternatively jewelled bearings may be used for the rod and shaft.

To reduce friction between the teeth of the rack 18 and teeth of the pinion 19, the area of contact of the teeth may be reduced. This may be achieved by forming the teeth of the rack on a part cylindrical engagement surface. Where the rod 16 is cylindrical, the teeth may extend round the full periphery of the rod and this has the advantage that the teeth on the pinion 19 will engage the teeth on the rod 16 regardless of the angular orientation of the rod 16 in the housing 33.

To permit adjustment of the rod 16 relative to the body 10 in relation to one end of the scale 23, the lower end of the rod which contacts the body 10 may be provided with adjustable contact means. As shown the lower end of the rod 16 comprises a pin 35 having a contact head for contacting body 10 and a portion which is threaded into the end of the rod 16. The position of the pin 35 in the rod 16 is adjusted initially and may then be fixed appropriately.

The above described sensors may be arranged so that the rod 16 contacts and is moved by the body 10 throughout the full range of displacements of the body so that the indicator provides a continuous indication of the position of the body 10 between its extreme positions P and Q. However there are circumstances in which part only of the displacements of the body provides a useful or meaningful indication. For such circumstances, the rod 16 is arranged so that the body 10 contacts it to move rod 16 and indicator 23 only when the body is between a predetermined position R (Figure 1) intermediate its initial position P and its final position Q, and its final position Q. The rod 16 is held out of contact with the body when the body is below this intermediate position R so that positions of the body below the intermediate position are eliminated from the indication provided by the indicator.

In this arrangement, the uppermost position of the rod 16 is determined by the uppermost position of the body. The lowermost position of the rod corresponding to the predetermined intermediate position R of the body is determined by a stop which is arranged to prevent further downward movement of the rod. For example, the stop may act to limit pivotal movement of the arm 21. Such a stop may be provided by the housing 33 or by a protuberance on the support for the scale (whether linear or angular) which protuberance extends into the path of the arm 21. Such a protuberance is shown at 34 in Figures 2 and 3. Alternatively the stop may limit downward movement of the rod 16 itself. Such an arrangement is shown, for example, in Figure 6, in which the upper end 16a of the rod 16 of sensor 1b is enlarged and is received in an enlargement in the passage 33a in the housing 33, the enlargement of the passage terminating in a shoulder 33b against which the enlarged end of the rod 16 seats when the rod is in its lowermost position. The enlarged end 16a of the rod 16 and the enlargement in passage 33a may be shaped to prevent or restrict rotation of the rod in the passage 33 about its longitudinal axis. The sensor is otherwise as shown in Figures 1 and 2 but this modification may equally be applied to the modified sensor of Figure 4 with linear or angular scale.

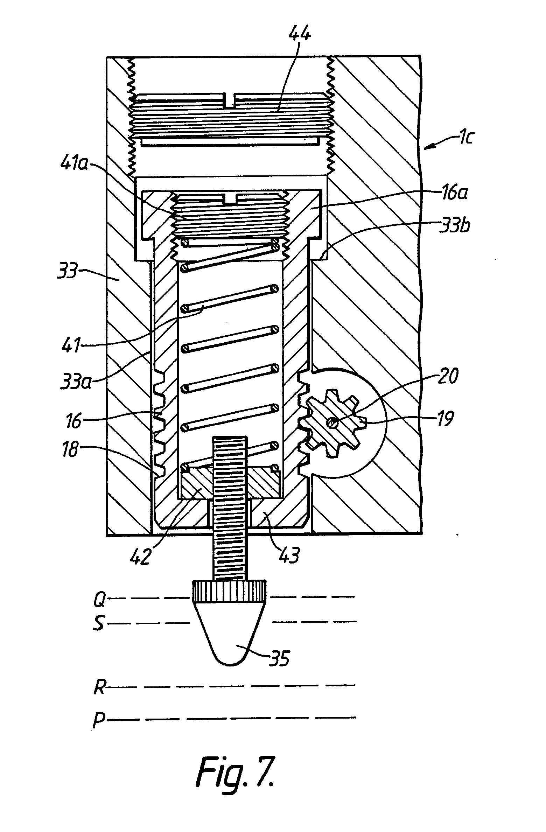

Where it is required that the sensor is responsive to displacements of the body 10 only intermediate the initial and final positions P, Q of the body, e.g. between first and second intermediate positions R and S (Figure 1), the sensor described above may be modified as shown in Figure 7. As shown, the adjustable pin 35 is arranged to be movable from an extended position to a retracted position relative to the rod 16 of sensor 1c against the bias of a spring 41. The pin 35 is adjustably threaded into a nut 42 which is received within the rod 16 and is slidable within the rod. The nut 42 is normally held abutted against an annular shoulder 43 at the lower end of the rod by the spring 41. The force applied by the spring 41 to the nut 42 can be adjusted in dependence on the circumstances of use of the sensor by adjustment of the position of a spring retaining plug 41a which is threaded into the rod 16. The rod 16 is, as in the previous embodiments, slidable in a correspondingly shaped passage 33a in the housing 33 but, in this embodiment, the upper end of the passage 33 is closed by an adjustably positionable plug 44 threaded into the passage 33a. The plug 44 serves as an adjustable stop and is positioned so as to be contacted by the upper end of the rod 16 when in contact with the body 10 and the body 10 is in its second intermediate position S, which is closer to the final position Q of the body than the first intermediate position R. For positions of the body between the second intermediate position S and the final position Q, the rod 16 is held abutted by the body against the plug 44 and the pin 35 is pushed by the body 10 into the rod 16 against the bias of the spring 41 so that, for these positions of the body, the rod is not moved by the body. As the body 10 drops below the second intermediate position S, the rod 16 starts to move with the body and continues to move with the body until the body reaches its first intermediate position R when movement of the rod ceases.

In this embodiment, as in the embodiment of Figure 6, the lowermost position of the rod 16 is determined by abutment of the enlarged upper end 16a of the rod with shoulder 33b in passage 33, and position R of the body is determined by adjustment of pin 35 in nut 42 when the nut is abutted against shoulder 43. The sensor of this embodiment is otherwise as described with reference to Figures 1 and 2 or Figure 4 with either a linear or an angular scale. Thus the substantial balancing of the moments of the rod and the arm and indicator described above in relation to the embodiment of Figures 1 to 4 is also provided with this embodiment which may also if required be provided with a spring 25 (not shown).

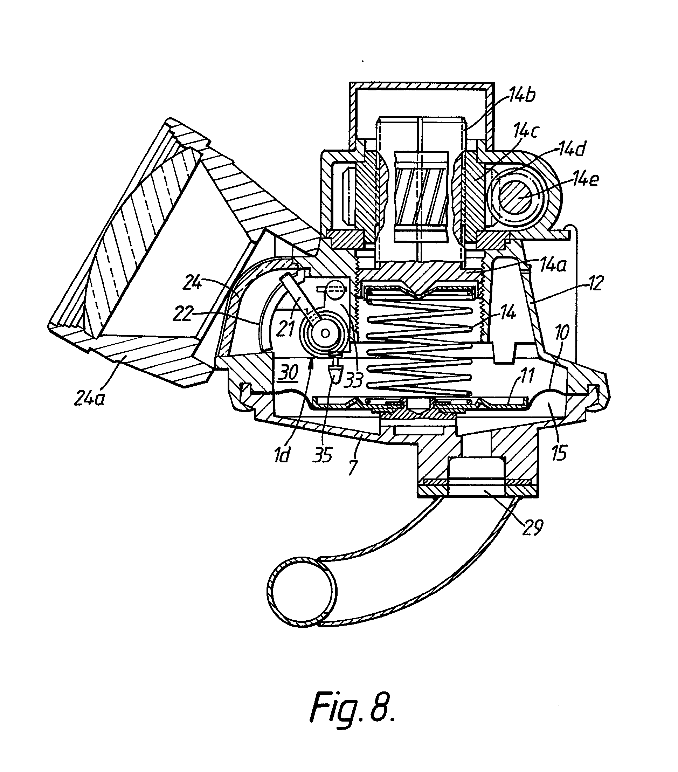

Figure 8 shows a fluid pressure sensing device which incorporates a sensor 1d. As shown the device comprises a housing having an upper part 12 and a lower part 7. Securely fixed between the upper and lower housing parts is a diaphragm which, in this embodiment, forms the body 10. The upper part 12 of the housing defines with the diaphragm 10 an upper chamber 30 which is maintained at a known pressure, for example it may be vented to the atmosphere. The lower part 7 of the housing defines with the diaphragm 10 a chamber 15 provided with an inlet 29 for fluid whose pressure is to be sensed. It will be appreciated that the diaphragm 10 may have other conventional forms, for example as shown hereafter, and may itself define chamber 15 within the housing.

The diaphragm 10 may be biased in one direction, the direction depending on the pressure of the fluid in chamber 15 relative to the pressure in chamber 30. For example, as shown, the pressure in the chamber 15 is intended to be greater than that in chamber 30 and the diaphragm is biased downwardly by a spring 14 positioned in chamber 30 between the upper part of the housing and a disc 11 secured to and forming part of the diaphragm 10.

In this embodiment, the diaphragm is deflected between an initial lowermost position (shown in Figure 8) upwardly towards an uppermost position to an extent which will depend on the pressure of the fluid in chamber 15 and the response characteristics of the diaphragm 10 and any biasing spring 14.

The sensor 1d is as described with reference to Figures 1 and 2 and is mounted in chamber 30 with the rod 16 generally perpendicular to the direction of deflection of the diaphragm. The sensor 1d may alternatively be as described with reference to Figures 4, 6 or 7. The scale 22, which as shown is a linear scale, is arranged to be visible from the outside of the housing through a window 24 provided in the housing part 12. The window may be replaced by a magnifying lens to magnify the scale, or a detachable magnifier 24a may as shown be provided for mounting over the window for magnifying the scale. The indicator 23 may, for example as shown in Figure 3, be in the form of a bar with a central slot 39 through which the scale can also be viewed.

The sensor may be arranged so that the rod 16 contacts the diaphragm and is moved thereby over the full range of diaphragm deflections or as shown only over the upper part of the range as described with reference to Figures 1, 2, 4 and 6, or over only an intermediate part of the range as described with reference to Figure 7 using a sensor with the modifications of Figure 7.

Because individual diaphragms may each have an individual response to pressure, the lowermost and, if required, the uppermost positions of the rod 16 are initially adjusted when the sensor has been incorporated in the device to suit the actual diaphragm response by adjustment of pin 35 in the end of rod 16 and the position of the plug 44, if provided.

It will be appreciated that the range of pressures sensed by the sensor can be varied by selection of an appropriate spring 14. Additionally, the pressure at which the diaphragm 10 contacts the end of the rod 16 of the sensor can be adjusted by adjustment of the compression of the spring 14. For this purpose, the upper end of the spring bears on a plug 14a which is threaded into the housing. The outer surface of the plug 14a may be provided with a diametral slot for engagement by a screw driver or, as shown, means may be provided for facilitating adjustment. As shown the upper end of the plug 14a is provided with a cylindrical extension 14b which is surrounded by a collar 14c which is rotatably mounted in the housing but held axially by the housing 12. A worm gear 14d transmits rotation of a manually rotatable shaft 14e to the collar to rotate the collar. The collar 14c is keyed to the extension 14b to transmit rotation to the plug 14a while permitting the plug 14a to move axially.

In the above described embodiments, the rod 16 of the sensor contacts the body 10 directly and its movements correspond directly with those of the body over the range of positions of the body which are to be sensed by the sensor. The movements of the body may be appropriately amplified by an appropriate selection of the length of the indicator arm 21 and/or an appropriate selection of the diameter of the pinion 19 and the parameters of the teeth of both the rack 18 and pinion 19.

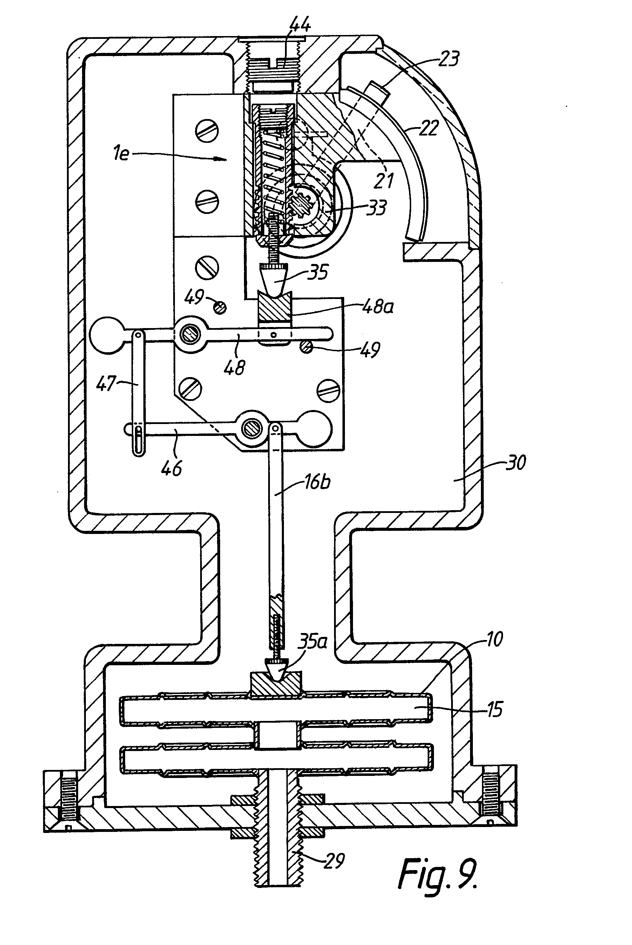

It may however be advantageous to further amplify the movement of the body 10 but without adding to the assembly of the rod 16, the pinion 19 and the arm and indicator, which would make it less sensitive. This can be achieved by providing one or an assembly of pivotal levers between the body 10 and the rod 16, for example as shown in Figure 9 in the context of a pressure sensing device. As shown in Figure 9, the sensor 1e comprises a main sensor which may be as described above with reference to Figures 1, 2, 4, 6 or 7. To this is added an auxiliary rod 16b for contacting body 10 (in this embodiment a diaphragm) and which may also have an adjustable contact pin 35a which may be threaded into the end of the rod 16b or may be threaded into a nut slidable within the rod 16b as described with reference to rod 16 in the embodiment of Figure 7. Auxiliary rod 16b extends generally parallel to the main rod 16 and is pivoted at its upper end on a first lever 46 which is pivotally mounted at 46a on the housing. Lever 46 is pivotally connected by a connecting link 47 to a second lever 48 which is pivotally mounted at 48a on the housing. Head 35 of the main rod 16 contacts lever 48 through an appropriate swivel or other element 48a pivoted on lever 48. The points at which the rods are pivoted on the levers, the levers on the housing and the connecting link 47 on the levers are arranged to provide the required amplification of the movement of the body 10. The connection of one of the levers 46, 48 to the link 47 may be slotted, the length of the slot being adjustable, to provide a lost motion connection between the body and the rod 16 to accommodate a predetermined initial movement of the diaphragm which does not produce movement of the rod 16 of the main sensor.

It will be appreciated that, by use of a similar but reducing linkage, movements of the body can be reduced rather than amplified.

As in the previous embodiments, stops may be provided for limiting downward and if required upward movement of the rod 16 so that the sensor indicates displacements of the body 10 over the upper part or an intermediate part only of the full range of the displacements of the body. As shown stops 49, which may be adjustably positionable, are provided for limiting angular movement of the lever 48, although it will be appreciated that one or more stops are also provided associated with the main sensor as previously described.

The above described pressure sensing devices may be used to indicate or measure pressure as an absolute pressure or relative to atmospheric or other known pressure, or pressure changes, the scale 22 being appropriately graduated. They may alternatively be used to indicate other parameters which vary with pressure. For example they may be used to indicate leakage of a fluid into or from a system. The scale 22 may then be suitably graduated, the rate of travel of the indicator over the scale being a function of and indicating the rate of or quantum of leakage. The scale may include an additional graduation to enable the user to disregard leakages below a maximum permissible level, e.g. if the indicator moves over a unit of such graduation in less than a predetermined time. They may also be used in a system supplied with gas from a cylinder of liquefied gas to give an indication of the amount of liquefied gas remaining in the cylinder. In such circumstances, the pressure sensing device may be coupled into the gas supply line either upstream of the gas pressure regulator or downstream of the gas pressure regulator and upstream of any appliances to be supplied with gas. Conveniently the device may be arranged to be mounted on the gas utilising appliance, e.g. a gas fire or cooker, so as to be readily visible to the user of the appliance.

In normal usage of such a system, the pressure of gas from the pressure regulator and upstream of any appliances to be supplied with gas, varies with the amount of liquefied gas in the cylinder, specifically decreasing as the amount of liquefied gas in the cylinder decreases, although the relationship is not linear. A sensor as described with reference to Figures 1, 2, 4 or 6 may be used, the sensor being arranged to indicate only when the pressure of gas is at or about its lowest usable pressure. Advantageously a sensor as described with reference to Figure 7 is used, the first selected intermediate position of the diaphragm being that that the diaphragm assumes when the pressure of the gas is at its lowest usable pressure and the second selected intermediate position being that that the diaphragm assumes when the pressure of the gas is sufficiently above the lowest usable pressure to give the user reasonable notice of the approaching need to replace the cylinder, so that he is alerted to the need to replace the cylinder as the indicator starts to move across the scale.

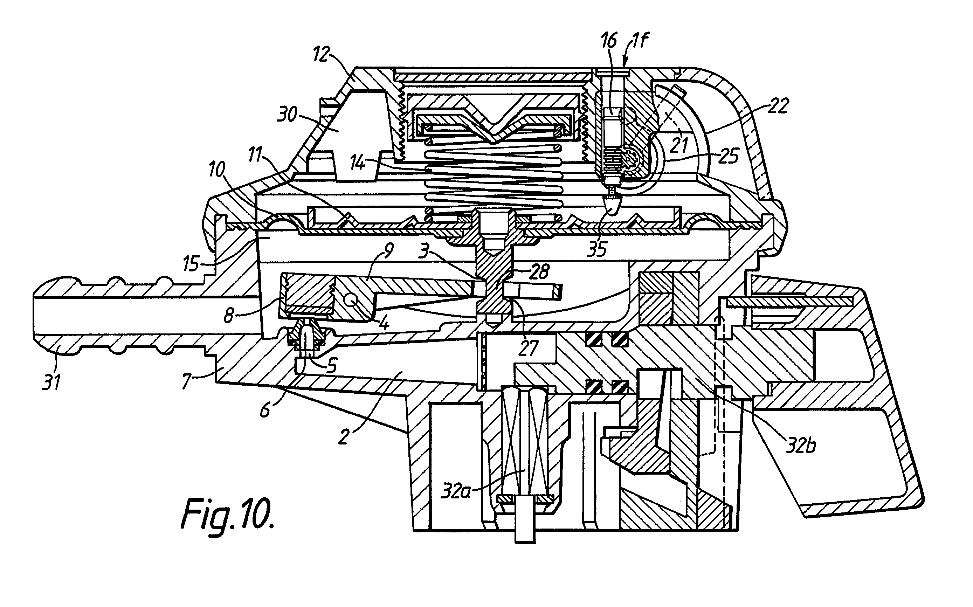

Alternatively a pressure sensor as described above may be incorporated in the pressure regulator itself, for example as shown in Figure 10. The gas pressure regulator shown in Figure 10 comprises a housing having an upper part 12 and a lower part 7 and a diaphragm 10 securely fixed between the upper and lower parts of the housing. The upper part of the housing defines with the diaphragm an upper chamber 30 which is in communication with the atmosphere and the lower part 7 of the housing defines with the diaphragm a gas outlet chamber 15 provided with an outlet 31 for connection to an appliance or other installation by which the gas is to be used. Outlet chamber 15 is connected to a gas inlet 29 via an orifice 5 provided with a valve 6, and a passage 2. The inlet 29 is provided with coupling means for coupling the inlet directly or indirectly to the outlet of the gas cylinder. As shown, the inlet 29 is intended to be coupled directly to the outlet of the gas cylinder and is provided with a member 32a which cooperates with a valve in the cylinder outlet to open the cylinder to the pressure regulator, and a manually operable valve 32b for opening and closing inlet 29.

Valve 6 comprises a valve member 8 for opening and closing orifice 5, valve member 8 being in the form of a rubber gasket which is carried on one end of a rocker arm 9. The rocker arm 9 is pivotally mounted in the lower part 7 of the housing by a shaft 4. The end of the rocker arm 9 opposite that carrying valve member 8 is connected to the diaphragm 10 by a hub 26. The hub 26 is secured to the centre of diaphragm 10 at one end and at its other end has a reduced diameter portion 28 which engages in a slot formed in the rocker arm 9 and which defines opposed shoulders 27 and 3 which abut the opposite faces of the rocker arm 9 so that axial movement of hub 26 causes pivotal movement of the rocker arm 9.

The diaphragm 10 is biased downwardly by a spring 14 which is located in chamber 30 between the upper part 12 of the housing and a disc 11 secured to and forming part of the diaphragm 10. As thus far described, the gas pressure regulator is conventional and its operation for regulating the pressure of gas is also conventional. In the absence of a supply of gas to inlet 29, diaphragm 10 is deflected downwardly under the bias of the spring 14 to an initial lowermost position. In this position, the rocker arm is pivoted by the diaphragm to move the valve member 8 away from the orifice 5 to fully open valve 6. When a full gas cylinder is coupled to inlet 29, the gas enters chamber 15 through the valve 6 and caused the diaphragm 10 to deflect upwardly initially to a final or uppermost position in which the rocker arm is moved to a position closing the valve 6. Thereafter, while gas is being withdrawn and used, a steady state is achieved in which the rocker arm 9 assumes a position in which the valve 6 is sufficiently open to maintain the required pressure in chamber 15. In this steady state, the diaphragm will initially (when the gas cylinder connected to inlet 29 is full) be positioned close to its final uppermost position and will then gradually move downwardly towards its initial position as the liquefied gas in the cylinder is depleted. With normal gas usage, the position of the diaphragm of the pressure regulator provides an indication of the pressure of the gas in the outlet of the pressure regulator but it also provides an indication of the quantity of liquefied gas remaining in the cylinder.

The sensor 1f, which may be as described with reference to Figures 1, 2, 4, 6 or 7 is mounted within chamber 30 in the upper housing part 12 as described above and may have a linear scale as shown in Figure 3 or may be provided with an angular scale. The scale 22 is advantageously calibrated to provide an approximate indication of the amount of liquefied gas remaining in the cylinder or an approximate indication of the time frame for normal use of the liquefied gas remaining in the cylinder, with a view to alerting the user of the time when the cylinder will need to be replaced.

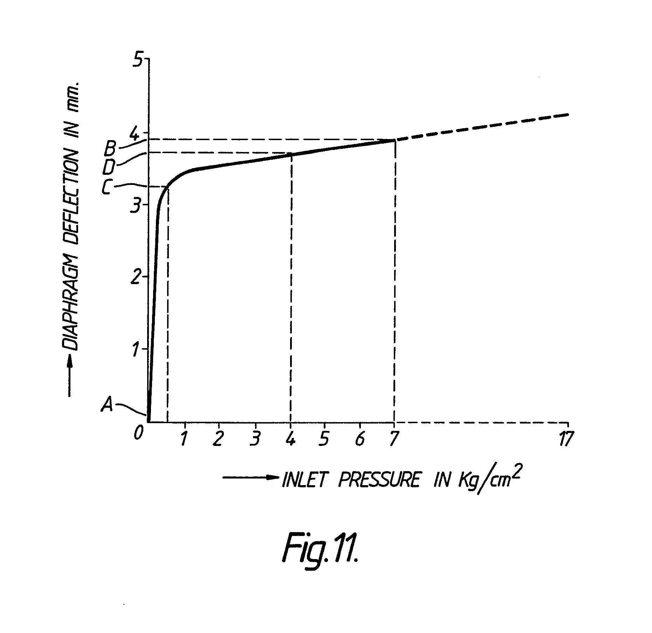

While the outlet pressure of the regulator and therefore the position of the diaphragm, when gas is in normal use, does vary with the amount of gas remaining in the cylinder, this variation is not linear and it is found that the majority of the deflection of the diaphragm occurs when the pressure in the cylinder is the vapour pressure of the gas in the absence of liquefied gas, which is below a usable pressure. Figure 11 is a graph showing variation in the position or deflection (in mm) of the diaphragm of one butane pressure regulator as described above, with inlet pressure (in $kg/cm^2$) of the gas, the regulator being one connected to a cylinder of butane which, when full, normally provides a maximum pressure of 7 $kg/cm^2$ under normal ambient conditions but for which the maximum pressure may increase to at least 17 $kg/cm^2$ under abnormal conditions. In the graph, the origin represents zero outlet pressure and the diaphragm in its initial position in which the regulator valve is fully open. It will be seen from the graph that the diaphragm is deflected by about 4 mm between its initial position A and its final position B. Position C is an intermediate position which the diaphragm assumes at about the minimum useful outlet pressure (between about 0.2 and 0.5 $kg/cm^2$ depending on ambient

temperature). In moving from position B to position C, the diaphragm normally moves only about 1 mm. Information about the position of the diaphragm and the contents of the cylinder when the diaphragm is between position C and position A is of no interest whatsoever because the cylinder at this stage contains only gas at the vapour pressure of gas in a virtually empty cylinder and the cylinder is beyond the point at which it should have been changed. Accordingly there is no point sensing and indicating these positions of the diaphragm. The useful information is provided by sensing and indicating diaphragm positions between position B and C.

When the sensor 1f is as described with reference to Figures 1, 2, 4 or 6, the rod 16 of the sensor is arranged so that the diaphragm is in contact with it to move rod 16 only when the diaphragm has been deflected to a position at or between positions B and C, the rod 16 being held out of contact with the diaphragm when the diaphragm is between positions C and A so that diaphragm deflection between positions C and A is eliminated from indication.

In use, when the regulator is connected to a full cylinder, the diaphragm 10 will initially assume its final position B in which the rod 16 will have been moved to its uppermost position and the indicator 23 to its lowermost position at one end of its scale 22. When use of the gas starts, the diaphragm 10 will then assume its steady state position initially close to position B and will then progressively move downwardly towards position C as the liquefied gas in the cylinder is depleted, the rod 16 and indicator 23 following movement of the diaphragm. As the diaphragm 10 moves to position C, the indicator 23 will move to the other end of its scale and, as the diaphragm falls below position C, the rod 16 will cease to move and will lose contact with the diaphragm.

In this embodiment, the limits of the scale 22 correspond to the intermediate and final diaphragm positions C and B and the scale may be calibrated in units indicating the amount of liquefied gas in the cylinder or, for example, as shown in Figure 3 in three sections 36, 37 and 38, section 36 indicating that the cylinder is full, section 37 indicating that the cylinder is nearly empty, and section 38 indicating the intermediate state of the cylinder between full and empty. Since the outlet pressure of the gas from the pressure regulator will vary with the ambient temperature, a number of different scales may be provided, for example as shown in Figure 3, for use at different ambient temperatures. It will be appreciated that to obtain a correct or true indication of the content of the cylinder at any one time, a reading from the indicator should be made only when the system is in normal use.

If the sensor is simply required to provide an indication of the approaching need to replace the cylinder, rather than also indicating when the cylinder is full, it can be sufficient for the indicator to indicate only when the diaphragm is positioned between the first intermediate position C and a second intermediate position D closer to position B and this can be achieved by using the modified sensor as described with reference to Figure 7.

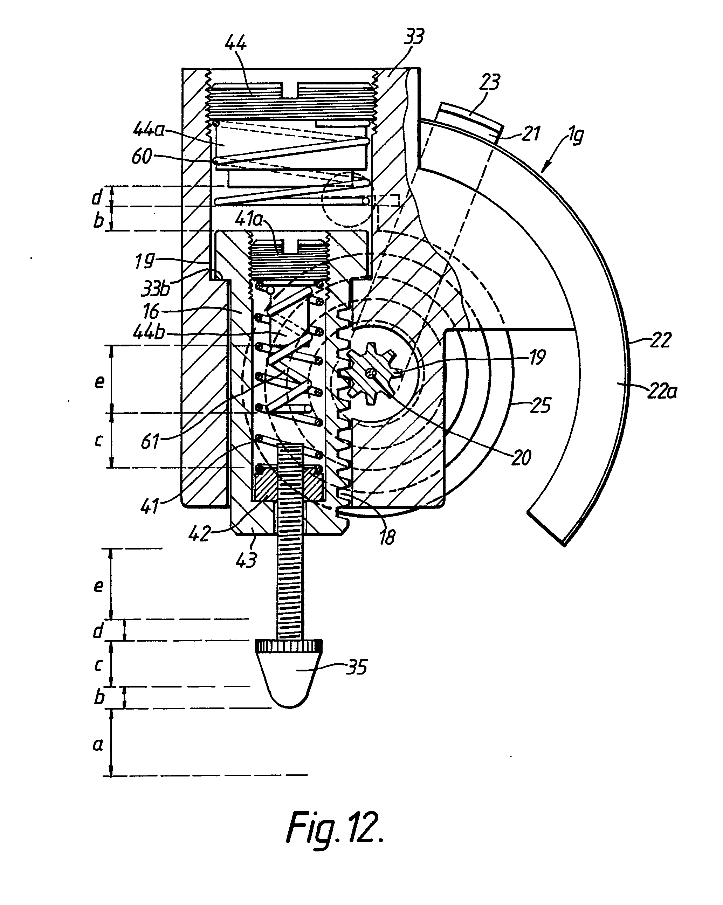

In the above described embodiments, the sensor is arranged to be responsive to body movements either over the full range of movements of the body or over a single predetermined part of the full range. The sensor may be further modified to enable it to be responsive in a plurality of predetermined parts of the full range of displacements of the body 10, for example as shown in Figure 12. The sensor 1g of Figure 12 is similar to that described with reference to Figure 7 and corresponding parts will be identified by the same reference numerals and will not be further described in detail. As shown the sensor has a linear scale 22 but it may alternatively have an angular scale and the arm 21 may be counterbalanced as shown in Figure 4. In addition to the above described parts, the sensor of Figure 12 includes a first temporary stop in the form of a compression spring 60, located in the space between the upper end 16a of rod 16 and stop 44, which spring 60 is arranged to be contacted by the upper end of rod 16 after a predetermined movement of rod 16 and to serve to temporarily halt further movement of the rod 16. The resistance to compression of the spring 60 is arranged to be greater than the resistance to compression of spring 41 so that, following contact of rod 16 with spring 60, further upward movement of the body merely causes pin 35 to be telescoped into rod 16, without further movement of the rod 16. A second temporary stop in the form of a second compression spring 61 is located in the space within rod 16 between the nut 42 and retaining plug 41a, which spring 61 serves to temporarily halt further telescoping movement of pin 35 in rod 16 when nut 42 comes into contact with the lower end of the spring 61. The resistance to compression of the spring 61 is arranged to be greater than the resistance to compression of spring 60 so that, following contact of nut 42 with spring 61, further upward movement of the body will cause further movement of the rod 16 against the bias of spring 60 and to compress spring 60. In this embodiment, this upward movement of rod 16 will be halted by abutment of the upper end of the rod with the lower surface of plug 44 which, as shown has an additional downward projection 44a to which the upper end of spring 60 is fixed. In a modification, a further compression spring providing a further temporary stop may be provided which is contacted by the upper end of rod 16 following a certain compression of spring 60 and which will serve to again temporarily halt upward movement of rod 16. Whether movement of rod 16 is halted temporarily or permanently at this point, further upward movement of the body can take place without movement of the rod 16 by virtue of compression of spring 61 by further telescoping movement of pin 35 into rod 16. as shown, the uppermost position of the body 10 is arranged to be within the extent of this further telescoping movement of pin 35 before it abuts the lower end surface of plug 41a. Like plug 44, plug 41a has a downward extension 41b to which spring 61 is attached. In a modification, a further spring may be provided within rod 16 to initially halt telescoping movement of pin 35 and then permit further telescoping movement of the pin following a further movement of the rod 16.

In the foregoing, operation of the sensor of Figure 12 has been described in the context of movement of the body from a lowermost position to an uppermost position but it will be appreciated that in movement of the body from the uppermost position to the lowermost position, the sequence is simply reversed.

By virtue of the above arrangement, the sensor of Figure 12 is designed to accommodate a displacement of the body between an initial position and a final position spaced by a distance greater than the sum of the individual displacements a + b + c + d and less than the sum of the individual displacements a + b + c + d + e, the sensor only being operative and responsive to and indicating displacement of the body in the parts b and d, each of which is followed or succeeded by an appropriate one of the parts a, c and e during which the sensor is not operative. The scale associated with the indicator is appropriately calibrated to distinguish the two parts of the range of the body displacements which are sensed.

The embodiment of Figure 12 enables the sensor to be responsive to displacements of the body in a plurality of predetermined spaced parts of the full range of displacements of the body by modifying the rod 16 so that it moves with displacement of the body only when the body undergoes displacements within the predetermined spaced parts of the overall range of displacements.

In the above described embodiments, the means for communicating movement between the elongate rod and the rotatable member comprise interengageable teeth on both the elongate rod and the rotatable member. It will be appreciated that the engagement surfaces of the elongate member and the rotatable member may engage through other means, for example the surfaces may simply be in frictional engagement. The engagement surfaces of both members may be roughened to increase the frictional force.

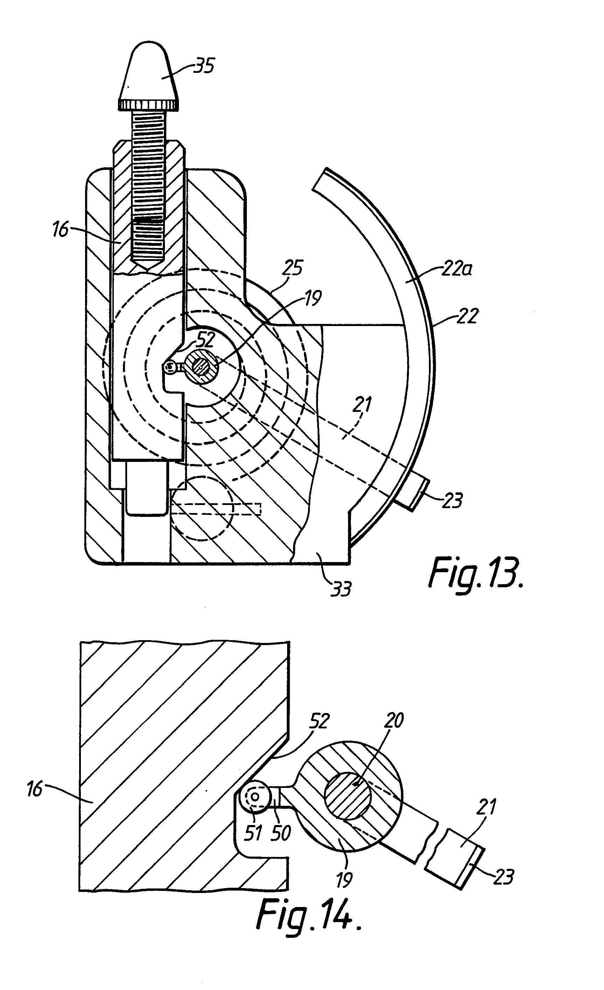

Alternatively, the engagement surfaces of the elongate and rotatable members may have other configurations which cause rotation of the rotatable member on longitudinal movement of the elongate member. For example, as shown in Figures 13 and 14, the rotatable member 19 of the sensor 1i may be provided with a radial projection 50 in the form of a cam follower which may, as shown, be provided with a roller 51 at its end. The end of the projection 50, or roller 51 if provided, engages with a longitudinally extending cam surface 52 provided on the elongate member 16 to cause rotation of the member 19 on longitudinal movement of rod 16. The member 19 has an initial position as shown in Figures 13 and 14 and is movable from that position in the anticlockwise direction (as shown in Figures 13 and 14), against the bias of hairspring 25, by the cam surface 52. The cam surface 52 can be configured to provide a non-linear relationship between movement of the rod 16 and rotation of the arm 21.

In this embodiment, the contact head of the rod 16 is at the upper end of the rod 16 and, as in the previous embodiments, the assembly of rod, rotatable member, arm with indicator and the helical spring is substantially balanced.

As described above, the above described sensors may be used for sensing displacement of a diaphragm with a view to indicating fluid pressure or pressure changes producing a deflection of the diaphragm. The sensors may also be used with other bodies which are displaced in accordance with a fluid pressure or pressure change. For example, as shown in Figure 15, a sensor as described above may be used to sense displacement of a bourdon tube 60. As shown in Figure 15, two sensors 1j and 1k are provided mounted in the housing of the tube 60. The rod 16 of sensor 1j does not sense displacement of the end of the bourdon tube 60 directly but through an amplifying linkage comprising pivoted levers 61 and 62 pivotally mounted on the end of the tube 60 and its housing and which may be provided with an adjustable stop 63 and an adjustable lost motion connection 64, similar to the linkage of Figure 7. It will be appreciated that the linkage between the end of the bourdon tube 60 and the sensor 1j may take a variety of different forms and indeed may be omitted so that the sensor is arranged to directly sense displacements of the end of the bourdon tube.

As shown in Figure 15, the sensor 1j is as described with reference to Figure 12 so that it is responsive over two separate parts of the full range of displacement of the end of the tube 60 and the scale is appropriately marked to indicate, for example, pressures between 4.0 and 4.35 kg/cm² and 8.00 to 8.25 kg/cm². It may alternatively be as described with reference to Figure 7 to indicate only one part of the full range.

The second sensor 1k is as described with reference to either Figure 1 or Figure 6 with the modification of Figure 4 and an angular scale and is arranged to sense and indicate movements of the bourdon tube 60 over the full range of movements of the tube. To this end, the pin 35 of the rod 16 of sensor 1k bears on the end of a lever 65 pivoted at 66 on a part of the housing of the bourdon tube and at 67 on lever 61. Where the device is not required to indicate movement of the bourdon tube over the full range of its movements, this sensor 1k may be omitted together with the lever 65.

It will be appreciated that two or more sensors as described above may be provided in any device incorporating a sensor, e.g. as described hereinbefore or hereinafter, one of the sensors being arranged to be responsive over the full range of displacements of the body and the or each other sensor being arranged to be responsive over one or more predetermined parts of the full range.

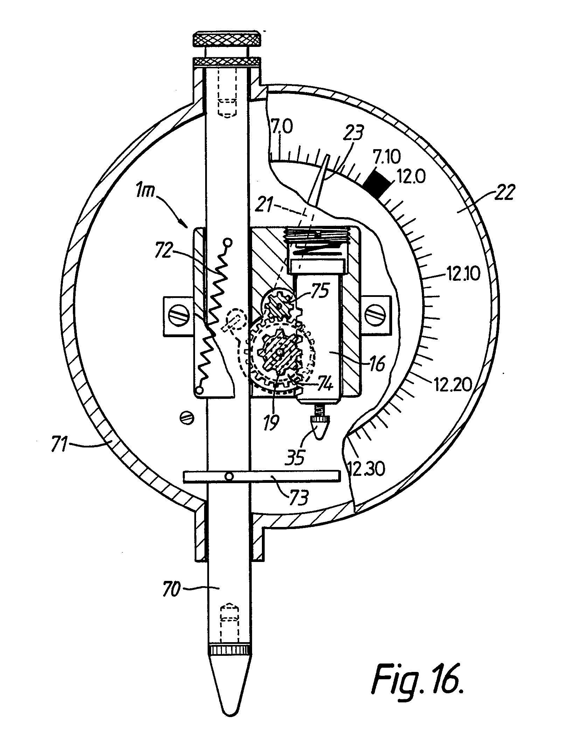

The above described sensors may also be used for indicating dimensions or variations from a fixed dimension. Figure 16 shows a gauge for measuring linear dimensions but which, by virtue of the incorporation of a sensor as described above, is arranged to indicate only over one or more parts of the full range of the gauge. As shown, the gauge comprises a contact rod 70 for contacting the body, the rod 70 being movable longitudinally in a housing 71 against the bias of a spring 72. The rod carries a laterally extending member 73 which is adjustably fixed on the rod 70 at an appropriate point and it is this member 73 which contacts the rod 16 of the sensor 1m for operating the gauge. The sensor may be as described with reference to Figure 4, 6 or 7 with an angular scale 22 and for providing an indication over the whole or a single part of the range of movements of rod 70, or, as shown, may be as described with reference to Figure 12 for providing an indication over two or more parts of the full range. The housing 33 of the sensor is fixed to the housing 71 with the rod 16 extending generally parallel to rod 70 and perpendicular to member 73. The angular scale 22 is provided on a face of housing 71.

This embodiment includes a modification applicable to other embodiments of sensor for amplifying rotation of the pinion 19 by the rod 16. As shown, mounted on the shaft 20 of the pinion 19 is a further gear wheel or pinion 74 which rotates with pinion 19 and meshes with a pinion or gear wheel 75 on the axis of which the arm 21 including indicator 23 and counterbalancing arm extension 21a (not shown) is mounted. The axis of wheel 75 is vertically aligned with the axis of pinion 19 so that it has no moment about the axis of pinion 19. The spring 25 is thus provided merely to counterbalance the rod 16 as described above.

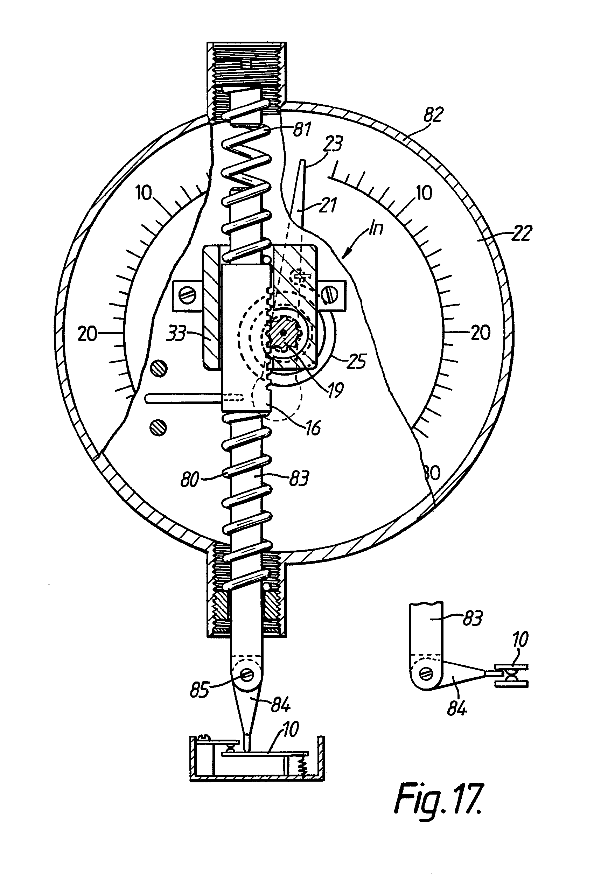

For indicating a force or force change, the rod 16 of the sensor may be arranged to be displaced against a calibrated or known force. As shown in Figure 17, the sensor 1m as described with reference to Figure 5 with an angular scale is incorporated in a device which is capable of indicating a compressive or tensile force. For this purpose, the rod 16 is mounted between two calibrated springs 80, 81 which bear on its ends, in a housing 82, the rod 16 being provided with an extension 83 at one end which projects from the housing 82 for engagement with the body 10 subject to the compressive or tensile force to be measured. In the relaxed condition of the gauge, the springs 80 and 81 are unstressed and the moment of the rod 16 of the sensor about the axis of pinion 19 is substantially balanced by the hairspring 25 so that the sensor has maximum sensitivity. In this embodiment there is no requirement for a slight resultant moment biasing the rod 16 in the direction of the body 10 so that the moment of the rod 16 can be balanced by the spring 25. Furthermore since the rod 16 is held between the springs 80, 81, no stops limiting movement of rod 16 are required.

In use, the rod 16 is moved longitudinally against the bias provided by one of the springs 80, 81, depending on whether the force is a compressive force or a tensile force, and the extent of the movement, which is an indication of the applied force, is indicated on one of the two parts of the scale 22, depending on the direction of movement of rod 16 which depends on whether the force is a compressive force or a tensile force.

The contact head 84 of the rod 16 may, as shown, be pivotable about axis 85 between the position shown in Figure 17, for measuring compressive forces, and a position at 90° thereto for measuring tensile forces.

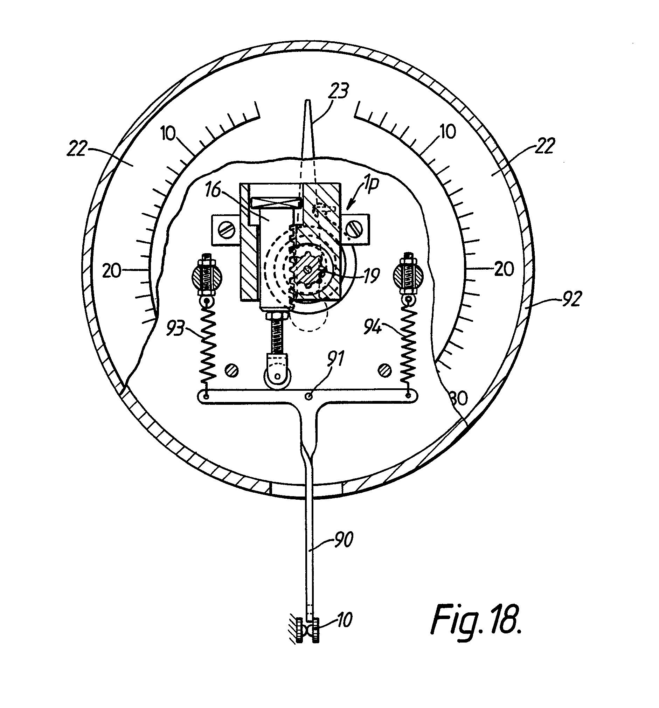

In the above described embodiment, the calibrated or known force against which the force to be measured is balanced is applied to the rod 16. In the modification shown in Figure 18 the calibrated force is applied to an intervening member whose displacement is then sensed by a sensor as described above. As shown in Figure 17, a generally T-shaped member 90 is pivotally mounted about central pivot point 91 in a housing 92, the upright of the T projecting out of the housing for contacting the body 10 which is subject to a compressive or tensile force. The calibrated springs 93 and 94 are connected to the ends of the arms of the member 90 which will thus be pivoted in accordance with the compressive or tensile force to be measured. Displacement of one of the arms of the member 90 is sensed by a sensor 1p which is as described in relation to Figure 4 with an angular scale. As in the preceding embodiment, the scale 22 of the gauge has two parts, one for compressive forces and the other for tensile forces.

Although the devices described above in relation to Figures 17 and 18 are both capable of measuring a force whether it is a compressive force or a tensile force, the devices may be modified to measure only a compressive force or only a tensile force by the omission of the appropriate one of the springs 80 or 81 in the embodiment of Figure 17 and 93 or 94 in the embodiment of Figure 18 and its replacement, if required, by an appropriate stop.

The above described embodiments of sensors, and of devices incorporating sensors, all provide an indication or measurement visible at the device. It will be appreciated that, in all the above described sensors and devices, the rotatable member 19, shaft 20 on which the rotatable member is mounted, or preferably the arm 21 or indicator 23, may be associated with means for sensing the position or movement for providing an indication or measurement electrically or electronically. The indication or measurement may be provided in analogue or digital form and may be provided remotely. Where no on-site indication is required, the arm may be integral or made integral with the rotatable member for rotation therewith. For example, the pinion 19 may be formed with a radially projecting portion providing the arm 21, the teeth being omitted in this portion.

Additionally, in all the above described embodiments of sensors and devices incorporating sensors, means may be provided in association with the rotatable member 19, the shaft 20 on which the rotatable member is mounted, the arm 21 or indicator 23, for triggering or actuating one or more alarms or switches or other mechanisms or devices for control or other purposes at one or more predetermined positions within one or more parts of the ranges of displacement of the body 10 in which the sensor is responsive. A mechanical link may be provided between the pinion, pinion shaft, arm or indicator and the mechanism or device triggered or actuated thereby, or an electric or electronic link may be provided with one or more contacts or switches which are engaged at one or more selected positions.

There is thus provided a sensor responsive to displacement of a body which can be arranged to be very sensitive to displacement and therefore capable of sensing very small displacements and which may be capable of responding to displacements in one or more predetermined parts of the overall range of displacement of a body. The sensor can be engineered at low cost and can be mass produced. It will also be appreciated that it can be incorporated in existing devices very simply with little or no modification of the body sensed because the rod 16 can be arranged merely to contact the body and does not need to be in any way mechanically linked or connected therewith.

## Claims

1. A sensor (1) for sensing relative displacement of a relatively movable body (10) comprising a housing (33), and a sensing assembly comprising an elongate member (16), a rotatable member (19) and arm means (21), the elongate member being mounted in the housing for linear longitudinal movement between a first position and a second position in dependence on the relative displacement of the body and having a longitudinally extending engagement surface (17), the rotatable member (19) having a circumferential engagement means and being mounted in the housing so as to permit engagement between the engagement surface of the elongate member (16) and the engagement means of the rotatable member (19) for causing rotation of the rotatable member with longitudinal movement of the elongate member, and the arm means (21) being arranged to be rotated with rotation of the rotatable member, wherein the assembly is arranged so as to be substantially balanced about the axis of the rotatable member.

2. A sensor as claimed in claim 1, wherein the engagement surface of the elongate member and the engagement means of the rotatable member are adapted for frictional engagement.

3. A sensor as claimed in claim 1, wherein the engagement surface of the elongate member (16) is provided with means (18) for positive engagement with the engagement means of the rotatable member (19).

4. A sensor as claimed in claim 3, wherein the engagement means of the elongate member and the engagement means of the rotatable member comprise interengageable teeth (18, 19).

5. A sensor as claimed in claim 4, wherein the engagement surface (17) of the elongate member (16) is part cylindrical, the teeth of the elongate member being correspondingly arcuate.

6. A sensor as claimed in claim 3, wherein the engagement surface of the elongate member (16) comprises a cam (52) and the engagement means of the rotatable member comprises a cam follower (50, 51).

7. A sensor as claimed in any of the preceding claims, wherein the one end of the elongate member (16) facing in the direction of the first position is adapted to contact the body but is not mechanically linked or connected therewith.

8. A sensor as claimed in any of the preceding claims, wherein the one end of the elongate member (16) facing in the direction of the first position is adapted to contact the body directly.

9. A sensor as claimed in any one of claims 1 to 7, wherein the one end of the elongate member (16) facing in the direction of the first position is adapted to contact the body through lever means 46 - 48; 62; 65).

10. A sensor as claimed in claim 9, wherein the lever means are arranged to amplify or reduce the displacement of the body transmitted thereby to the elongate member.

11. A sensor as claimed in any of claims 8 to 10, wherein the one end of the elongate member (16) is provided with contact means (35) which are adjustable for adjusting the position at which initial movement of the elongate member (16) occurs.

12. A sensor as claimed in claim 11, wherein the contact means (35) comprises a pin having a contact head for contacting the body and which is threaded into the end of the elongate member or a part thereof.

13. A sensor as claimed in either of claims 11 or 12, wherein the contact means (35) is movable relative to the elongate member to permit displacement of the body when in contact with the contact means without movement of the elongate member and rotatable member.

14. A sensor as claimed in claim 13, wherein the contact means (35) is biased by biasing means (41) relative to the elongate member to an initial extended position and is movable against the bias to a retracted position relative to the elongate member.

15. A sensor as claimed in any of the preceding claims, wherein the assembly is arranged so that there is a small resultant force acting on the elongate member in a direction biasing the elongate member towards the first position thereof.

16. A sensor as claimed in claim 15, wherein the resultant force is less than the force acting on the body and causing the displacement of the body which is to be sensed.

17. A sensor as claimed in any of the preceding claims, wherein the arm means (21) and elongate member (16) are arranged with their centres of gravity on opposite sides of the axis of the rotatable member (19) such that their moments about the axis of the rotatable member are opposed over the full range of movements of the arm.

18. A sensor as claimed in any of the preceding claims, wherein the elongate member (16) is arranged to be movable vertically.

19. A sensor as claimed in any of the preceding claims, wherein the arms means comprises an arm (21) coupled to be rotated by the rotatable member (19) and an indicator (23) movable over a scale (22).

20. A sensor as claimed in any of the preceding claims, wherein the assembly comprises biasing means (25) acting on another component thereof and contributing to balancing of the assembly about the axis of the rotatable member (19).

21. A sensor as claimed in claim 20, wherein the arm means (21) is adapted so that it is balanced about the axis of the rotatable member, the biasing means at least partially counterbalancing the moment of the elongate member (16) about the axis of the rotatable member (19).

22. A sensor as claimed in either claim 20 or claim 21, wherein the biasing means comprises a spring.

23. A sensor as claimed in any of the preceding claims which is adapted to be responsive to displacements of the order of or less than one millimetre.

24. A sensor as claimed in any of the preceding claims which is adapted to be responsive to displacements caused by pressures or forces or changes in pressure or force of the order of or less than ten millibars or ten centinewtons (0.1N).

25. A sensor as claimed in any one of the preceding claims which is adapted to be responsive to displacement of the body in a part only of the full range of displacements of the body.

26. A sensor as claimed in any one of the preceding claims which is adapted to be responsive to displacement of the body in a plurality of parts only of the full range of displacements on the body.

27. A sensor as claimed in any one of the preceding claims, comprising stop means (34; 33b; 44; 60; 61) for holding the elongate member (16) stationary at least temporarily relative to the body.

28. A sensor as claimed in claim 27, comprising first stop means (34; 33b) for preventing movement of the elongate member (16) beyond the first position and for holding the elongate member out of contact with the body during displacement of the body in a first part of the full range of displacement of the body.

29. A sensor as claimed in claim 28, comprising second stop means (44; 60) for holding the elongate member stationary after a predetermined movement of the elongate member from the first position.

30. A sensor as claimed in claim 29, wherein the elongate member comprises a contact head (35) for contacting the body, the contact head being retractable relative to the elongate member against a bias such that when displacement of the body causes the elongate member to contact the second stop means (44; 60) further displacement of the body causes the contact head to retract relative to the elongate member.

31. A sensor as claimed in either claim 29 or claim 30, wherein the second stop means (44) prevents further movement of the elongate member and defines the second position thereof.

32. A sensor as claimed in claim 30, comprising third stop means (61) for holding the contact head (35) stationary relative to the elongate member after a predetermined further displacement of the body, the second stop means (60) being adapted to be overcome when the contact head (35) is held stationary by the third stop means (61) to permit further movement of the elongate member with further displacement of the body.

33. A sensor as claimed in claim 32, comprising fourth stop means (44) for holding the elongate member stationary relative to the body after a further predetermined displacement of the body, the third stop means (61) being adapted to be overcome on contact of the elongate member with the fourth stop means (44) to permit further retraction of the contact head (35) relative to the elongate member (16) on further displacement of the body.

34. A fluid pressure sensing device comprising a body (10; 60; 73; 90) displaceable in accordance with a pressure to be sensed and a sensor as claimed in any of the preceding claims for sensing predetermined displacements of the body.

35. A fluid pressure sensing device as claimed in claim 34, comprising a housing (7, 12), wherein the body comprises a diaphragm (10) defining in the housing a first chamber (15) for connection to the fluid whose pressure is to be sensed and a second chamber (30) which is in use maintained at a known pressure, and the sensor is mounted in the second chamber with the elongate member (16) extending substantially parallel to the direction of displacement of the diaphragm for contact by the diaphragm.

36. A fluid pressure sensing device as claimed in claim 35, wherein the one end of the elongate member (16) facing in the direction of the first position thereof is spaced from the diaphragm (10) so that it is not contacted thereby during an initial predetermined displacement of the diaphragm.

37. A fluid pressure sensing device as claimed in claim 34, wherein the body is a bourdon tube (60).

38. A gas pressure regulator comprising a housing (7, 12) having an inlet (29) and an outlet (31) for gas, valve means (6) between the inlet and outlet for regulating the supply of gas to the outlet, means for controlling the valve means in dependence on gas pressure at the outlet, the valve control means comprising a flexible diaphragm (10) mounted in the housing and defining a first chamber (15) exposed to the gas pressure at the outlet and a second chamber (30) exposed to a known pressure, and a sensor as claimed in any of claims

14

1 to 34 mounted in the second chamber with the elongate member (16) thereof arranged to be contacted by the diaphragm (10).

39. A gas pressure regulator as claimed in claim 38, wherein the one end of the elongate member (16) facing in the direction of the first position thereof is spaced from the diaphragm (10) so that it is not contacted thereby during an initial predetermined displacement of the diaphragm.

40. A gas pressure regulator as claimed in either claim 38 or claim 39 for regulating the pressure of gas from a cylinder of liquefied gas, wherein the arm means of the sensor comprises an indicator (23) movable over a scale (22), the scale being calibrated to indicate the amount of liquefied gas remaining in the cylinder.

41. A displacement measuring device comprising a housing (71), a rod (70) for contacting an element whose displacement is to be measured and mounted for longitudinal movement in the housing and a sensor as claimed in any of claims 1 to 34 mounted in the housing with the elongate member (16) thereof arranged to be contacted by a body (73) movable with the rod (70).

42. A displacement measuring device as claimed in claim 41, wherein the one end of the elongate member (16) facing in the direction of the first position thereof is spaced from the body (73) so that it is not contacted thereby during an initial predetermined displacement of the body.

43. A force sensing device comprising a sensor as claimed in any of claims 1 to 34, wherein the elongate member (16) is arranged to be subject to the bias of a calibrated spring (80; 81; 93; 94) and to be moved by a body (90) subject to and displaceable by the force to be sensed against the bias of the calibrated spring.

44. A force sensing device as claimed in claim 43, wherein the calibrated spring acts directly on the elongate member of the sensor.

45. A force sensing device as claimed in claim 43, wherein the elongate member (16) is coupled to a pivotally mounted lever (90) which is adapted to contact the body, the calibrated spring acting on the lever.

Fig.1.

Fig. 2.

Fig. 3.

Fig. 4.

Fig.5.

Fig.6.

Fig. 7.

*Fig. 8.*

*Fig.9.*

Fig.10.

Fig.11.

Fig.12.

Fig.13.

Fig.14.

*Fig.15.*

Fig.16.

Fig.17.

Fig.18.

# EUROPEAN SEARCH REPORT

European Patent Office

**Application number**

## DOCUMENTS CONSIDERED TO BE RELEVANT

EP 89306898.1

| Category | Citation of document with indication, where appropriate, of relevant passages | Relevant to claim | CLASSIFICATION OF THE APPLICATION (Int. Cl.⁵) |
|---|---|---|---|
| X | <u>DE - A1 - 2 333 332</u> <br> (KÄFER) | 1,3-7, 18-23, 29-31, 41,42 | G 01 D 5/10 <br> G 01 B 3/22 |
| A | * Fig. 1, pos. 15,16,17,32; page 4, lines 5-9; * | 2,8-10,15, 16 | |

---

|  | TECHNICAL FIELDS SEARCHED (Int. Cl.⁵) |
|---|---|
|  | G 01 B 3/00 <br> G 01 D 5/00 <br> G 01 L 1/00 <br> G 05 D 13/00 |

The present search report has been drawn up for all claims

| Place of search | Date of completion of the search | Examiner |
|---|---|---|
| VIENNA | 26-02-1990 | KUNZE |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82